# EUROPEAN PATENT SPECIFICATION

(11) **EP 4 181 360 B1**
(45) Date of publication and mention of the grant of the patent: **07.05.2025**
(21) Application number: 22201783.2
(22) Date of filing: 17.10.2022
(51) Int. Cl.: H02K 9/197, H02K 3/24

(54) **ELECTRIC MACHINE**
ELEKTRISCHE MASCHINE
MACHINE ÉLECTRIQUE

(30) Priority: 16.11.2021 GB 202116498
(43) Date of publication of application: 17.05.2023
(73) Proprietor: Rolls-Royce plc, London N1 9FX (GB)
(72) Inventor: Chong, Ellis F H, Derby, DE24 8BJ (GB)
(74) Representative: Rolls-Royce plc

(56) References cited:
- EP-A1- 2 242 164
- WO-A1-2020/120611
- JP-A- 2000 041 361
- JP-A- 2001 078 391
- JP-U- S56 110 770
- US-B2- 10 756 598

## Description

The present disclosure concerns an electric machine suitable for an aircraft propulsion system, and a propulsion system comprising the electric machine.

Electric machines can take the form of either generators, which convert mechanical torque to electrical energy, or motors, which convert electrical energy to mechanical torque. In either case, it is desirable to provide electric machines having a high power density, i.e. a high power per unit mass or volume. Such high power densities are particularly useful for applications such as aircraft propulsion systems, where both high power and low mass are desirable.

Such high power densities can result in cooling challenges. In particular, it can be difficult to provide sufficient coolant flow at a sufficiently low temperature to maintain low electric machine temperatures during use, where the electric machine has a physically small volume. Such problems are exacerbated where the coolant comprises a gaseous coolant such as air, which has a low heat transfer coefficient.

European patent application EP 2242164 discloses a rotary electric machine. A cooling unit includes an outer periphery cooling portion that is disposed along an outer peripheral surface of a coil end and includes a plurality of injection holes for injecting a cooling medium onto the outer peripheral surface 3a, and an end surface cooling portion that is disposed along an axial end surface of the coil end and includes a plurality of injection holes for injecting the cooling medium onto the axial end surface.

International patent application WO 2020120611 relates to a cooling channel for a winding overhang of an electrical machine. In order to conduct a cooling fluid, the cooling channel is designed with at least one inflow and at least one outflow and is annular for provision around the winding overhang. The cooling channel has an axially movable contact pressure part that is situated such that a cooling fluid flows against the contact pressure part, thus generating a contact pressure on the cooling channel.

Japanese patent application JP 2001078391 discloses an outer shell composed of a stator frame and bearing brackets, a rotor that has a stator and a rotary shaft, and at the same time, partition members that separate the upstream side from the downstream one in axial flow fans which are mounted to the rotary shaft for fixing. An inner circumference side coil winding end part projects inside nearly into an arc shape at the end of stator coil winding covered with the partition members, while being located on the downstream side.

Japanese patent application JP 2000041361 discloses an electric rotary machine including brackets, which has a core in a stator frame and are arranged on both sides, a winding constituted of a bottom side winding accommodated in the core and an aperture side winding, a rotating shaft which is arranged in the core and rotatably supported by the brackets, a baffle plate constituted of a base part covering an end portion of the winding, a side part and a fixing part. An axial flow fan is formed of a blade constituted of a hub, which is arranged corresponding to the base part of the baffle plate and is fitted in a rotating shaft and a tip, and a wind tunnel mounted on the frame. A boundary point turning to an end portion of the winding from an aperture side winding, the other end of the base part connected with a slant part and a circular arc part in this order from the side part of the baffle plate, and a rear edge of the front end formed of a cord length constituting the axial flow fan are installed. The boundary point, the other end and rear edge are almost coincidingly arranged in an axial direction position. The circular arc part of the baffle plate and the connection part of the base part are arranged to almost coincide with the substantially central part of the cord length of the blade tip.

Japanese patent publication JPS 56110770 discloses an electric machine comprising a stator having a cooling flow provided by apertures located in a housing. A baffle redirects cooling flow within the housing.

The present disclosure seeks to provide an electric machine having improved cooling.

According to a first aspect there is provided an electric machine as defined in claims 1 to 4.

According to a second aspect of the invention there is provided an aircraft propulsion system as defined in claims 5 to 8.

Embodiments will now be described by way of example only, with reference to the Figures, in which:
**Figure 1** is a plan view of an aircraft comprising an electric propulsion system;
**Figure 2** is a cross-sectional side view of the propulsion system of the aircraft of figure 1;
**Figure 3** is a cross-sectional view of an electric machine in the form of a motor for use in the propulsion system of figure 2, which is not in accordance with the present invention;
**Figure 4** is a cross-sectional side view of part of a stator and stator housing of the electric machine of figure 3;
**Figure 5** is a perspective side view of a baffle of the electric machine of figure 3;
**Figure 6** is a cross-sectional side view of part of a first alternative stator for the electric machine of figure 3, which is not in accordance with the present invention; and
**Figure 7** is a cross-sectional side view of part of a second alternative stator for the electric machine of figure 3, which is in accordance with the present invention.

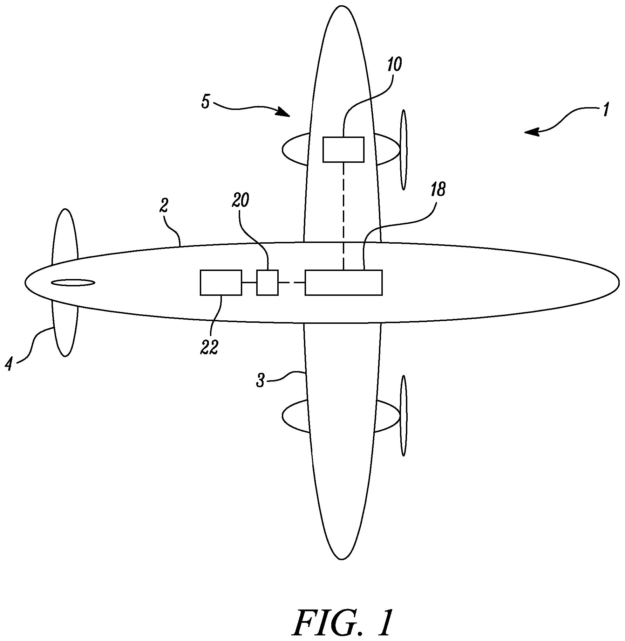

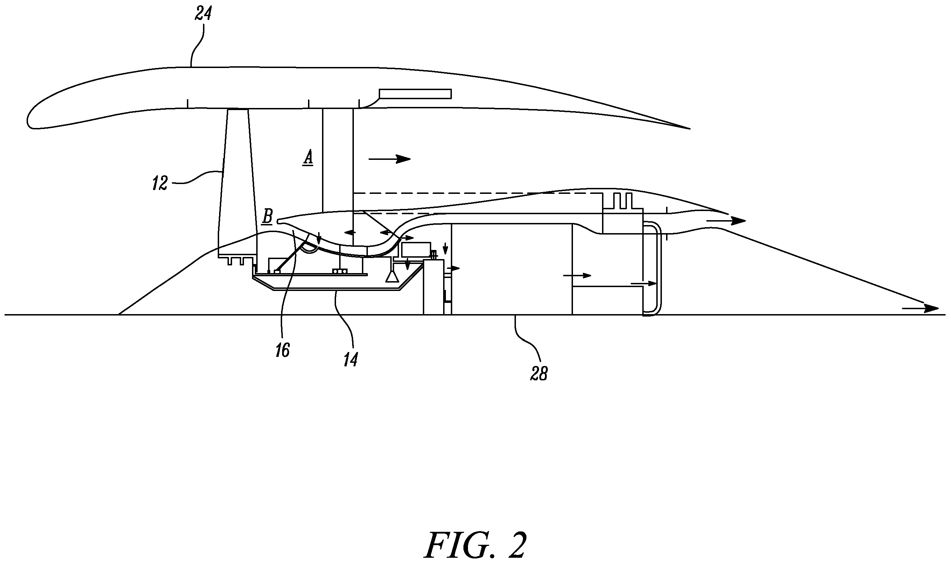

With reference to Figure 1, an aircraft 1 is shown. The aircraft is of conventional configuration, having a fuselage 2, wings 3, tail 4 and a pair of propulsion systems 5. One of the propulsion systems 5 is shown in figure detail in figure 2. Each propulsion system is provided with electrical energy from an energy storage system and / or a generator 20, which may be driven by a prime mover such as a gas turbine engine 22.

Figure 2 shows the propulsion system 5 schematically. The propulsion system 5 comprises an electrical machine in the form of an electric motor 28 configured to drive a propulsor in the form of a ducted fan 12 via a fan shaft 14. The motor 28 is fed with cooling fluid such as air or liquid coolant via cooling air duct 16, which is provided with pressurised cooling flow from the fan 12. The fan 12 is housed within a nacelle 24.

The motor 28 is of a conventional type, comprising a permanent magnet electric machine, though other types of electric machines could utilise the disclosed cooling arrangement, such as induction machines and brushed machines.

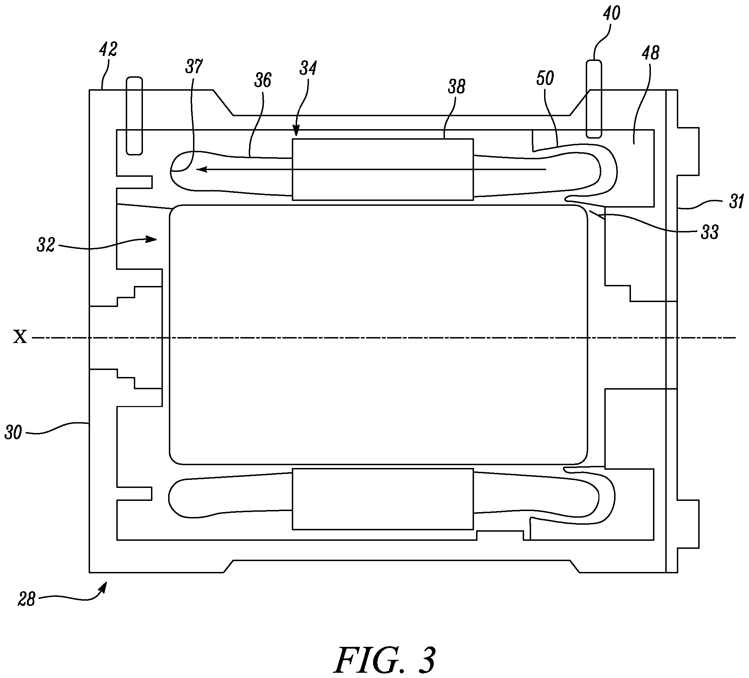

Figure 3 shows the motor 28, which is not in accordance with the present invention, in more detail. The motor 28 comprises a motor housing 30 which houses motor components. The motor housing 30 provides structural support for motor components, and is mounted to structural components of the propulsion system. Additionally, the housing 30 is generally fluid tight, save for openings where coolant ducts and electrical connections are provided.

The motor comprises a rotor 32 which is coupled to the fan shaft 14, and is surrounded by a stator 34, provided radially outward of the rotor 32. The rotor 32 is configured to rotate about an axis X. The stator 34 comprises electrical windings 36, which can be energised to produce a rotating magnetic field. The electrical windings 36 comprise end windings 37, which are provided at axially forward and aft ends of the stator winding 36. This rotating magnetic field interacts with a magnetic field of the rotor 29, to cause rotation when acting as a motor. The windings are wound round a stator core 38, which typically comprises a plurality of laminations made of steel or similar ferromagnetic material.

The motor housing 30 forms a stator housing, which contains the stator 34, including the windings 36 and core 38. A drive plate 31 is provided at an axial end, through which an axle (not shown) extends, for providing motive power. The stator housing 30 is penetrated by a coolant inlet duct 40, and a coolant outlet duct 42. The coolant inlet duct 40 communicates with an inlet chamber in the form of a coolant manifold 44 provided within the stator housing 30. The coolant inlet manifold 48 comprises a space defined by the inner walls of the stator housing 30 and by a baffle 50. The baffle 50 is positioned between the stator end windings 37 and the housing 30, and thereby controls fluid flow between the coolant inlet manifold 48 and stator end windings 37.

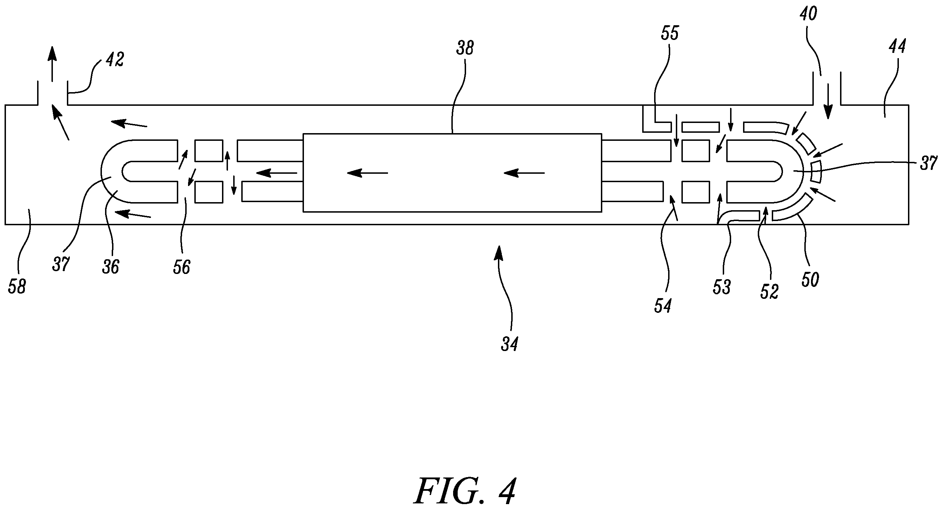

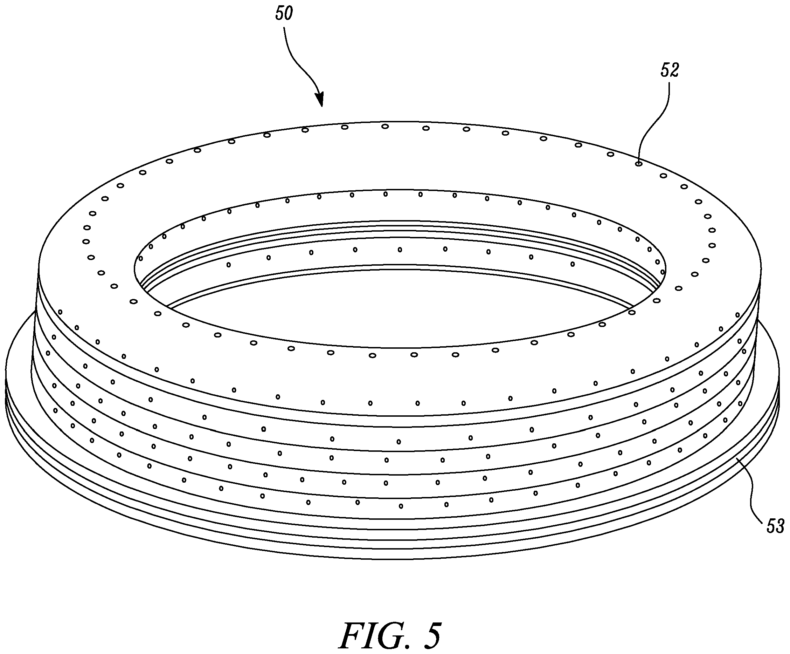

Part of the stator 34 is shown in further detail in figure 4. The baffle 50 is shown in further detail in figure 5, and is in the form of a ring or toroid which extends around the end windings 37 of the stator. The baffle 50 has a curved profile, which is curved to approximately match the curvature of the end windings 37, is spaced from the end windings 37 in use, and has an open end at an axially extending inward side to accept the end windings 37. Referring again to figure 4, seals 53, 55 are provided to seal between the baffle 50 and housing 30. The baffle 50 further comprises a plurality of apertures 52, which extend through the baffle 50 between the inlet manifold 44 and the stator end windings 37. The baffle apertures are distributed about the whole circumference of the baffle ring, and various apertures preferably extend radially inwardly and outwardly, as well as axially, in a direction generally toward the end windings 37. In some cases, the apertures 37 may be shaped to define a convergent nozzle, with the apertures converging in the direction of the end windings 37. In one embodiment, the baffle 50 is formed by Additive Layer Manufacture (ALM) such as Direct Layer Deposition (DLD) to allow for complex nozzle geometries, which may direct coolant flow in desired directions at desired velocities and flow rates. A further plurality of apertures 54 are provided within the stator windings 36. The stator core 38 comprises a hollow portion, through which coolant can flow. Similarly, at the other axial end, further apertures 56 are provided in the stator windings 36, which lead to an outlet manifold 58, which in turn communicates with the coolant outlet 42. A sleeve 33 is provided at each end, to confine the coolant within the stator, and provides a seal between the stator and rotor.

A coolant passageway is therefore defined by the inlet 40, baffle apertures 52, end winding apertures 52, stator core 38, aperture 56, outlet manifold 58 and outlet 42. In use therefore, coolant fluid (in this case air, though liquid coolants such as water and glycol could also be used) flows through the inlet 40, baffle apertures 52, end winding apertures 52, stator core 38, aperture 56, outlet manifold 58 and out the outlet 42, as shown by the arrows in figure 4, picking up heat and cooling the stator windings 36 and stator core 38 in use.

It has however been found that particular attention needs to be paid to cooling of the stator end windings 37. These experience high heat loads and temperatures in use, which can lead to failure. The present arrangement provides improved cooling of this area in particular.

As shown by the arrows in figure 4, coolant entering the inlet manifold is held back by the baffle 50. The apertures 52 in the baffle 50 act to restrict the flow of coolant, whilst also accelerating the coolant and acting as nozzles, thereby directing coolant to impinge upon the stator end windings.

This direct impingement flow toward the stator end windings 37 has been found to greatly increase cooling effectiveness. Computer Fluid Dynamics (CFD) simulations were performed on a simulated motor. In the simulation, 5 litres / minute of coolant was supplied, which resulted in end winding temperatures of 108°C. In comparison simulations, with the same geometry, coolant temperatures and cooling flows, but with the baffle removed, hot spots of 131°C were found at the end windings. Consequently, the impingement cooling provided by the baffle provided a 23°C reduction in end winding temperatures. By raising the coolant flow rate to 19 litres / minute, a maximum winding temperature of 97°C could be achieved - a 34 °C reduction. As will be understood, for various applications, the maximum number of holes and the diameter of the holes could be adjusted to provide optimum cooling. Without wishing to be limited by theory, this increased coolant effectiveness is believed to result from the increased local flow velocity at the end winding surface caused by the apertures acting as nozzles, resulting in an increased heat transfer coefficient. Additionally, the high-velocity coolant jets create a thing boundary layer of coolant over the windings, thus increasing the surface area in contact with the high-velocity coolant, and reducing hot-spots.

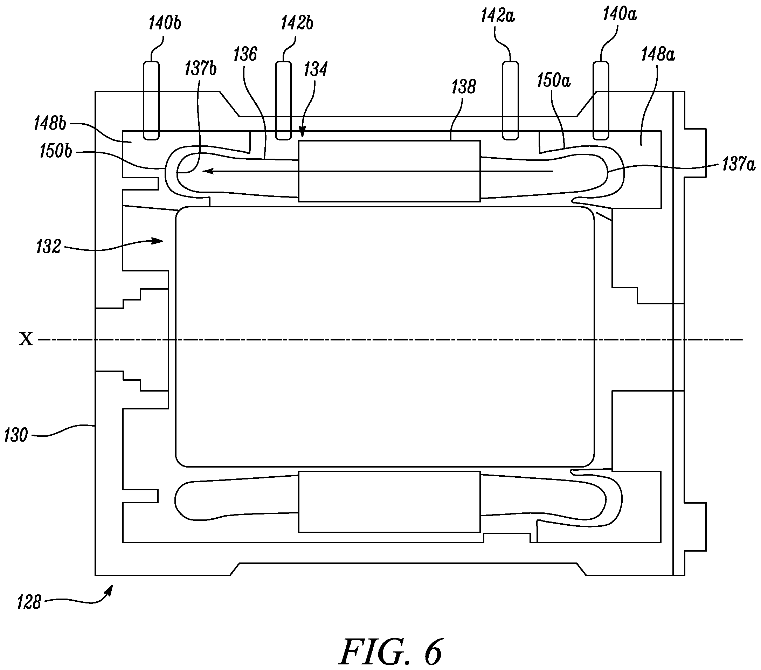

Figure 6 shows a first alternative cooling arrangement for an electric machine in the form of a motor 128, which is not in accordance with the present invention. The motor 128 is similar to the motor 28, having a rotor 132 and stator 134 comprising a core 138 and stator winding 136 provided within a housing 130. However, the arrangement of cooling inlets, outlets and baffles differs from that of the motor 28.

In the motor 128, first and second inlets 140a, 140b are provided, which communicate respectively with first and second outlets 142a, 142b. Each inlet 140a, 140b is provided at a respective axial end of the stator housing 130, and feeds into a respective inlet manifold 148a, 148b. Each inlet 140a, 140b is separated from its respective outlet 142a, 142b by a respective baffle 150a, 150b. The baffles 150a, 150b are similar to the baffle 50 of the first embodiment, having apertures (not shown) extending therethrough, to provide fluid communication between the respective inlets 140a, 140b and outlets 142a, 142b. Each baffle 150a, 150b is positioned adjacent a respective end winding 137a, 137b of the stator winding 136.

Consequently, in use, coolant (such as air or a liquid coolant) flows from respective inlets 140a, 140b into respective inlet manifolds 148a, 148b, through the apertures provided in the respective baffles 150a, 150b, whereupon the coolant flow impinges on the end windings 137a, 137b. Spent coolant is then directed out of respective outlets 142a, 142b.

Consequently, each end winding is actively cooled by impingement cooling, while the stator core 138 is not actively cooled by the coolant. Such a design may be appropriate where room can be provided for a coolant system at each end, and where temperatures of the uncooled stator core are acceptable in use.

In order to prevent leakage between the two ends of the stator, full vacuum impregnation of the stator winding may be utilised, to ensure that no fluid passage is provided through the central portion of the stator winding.

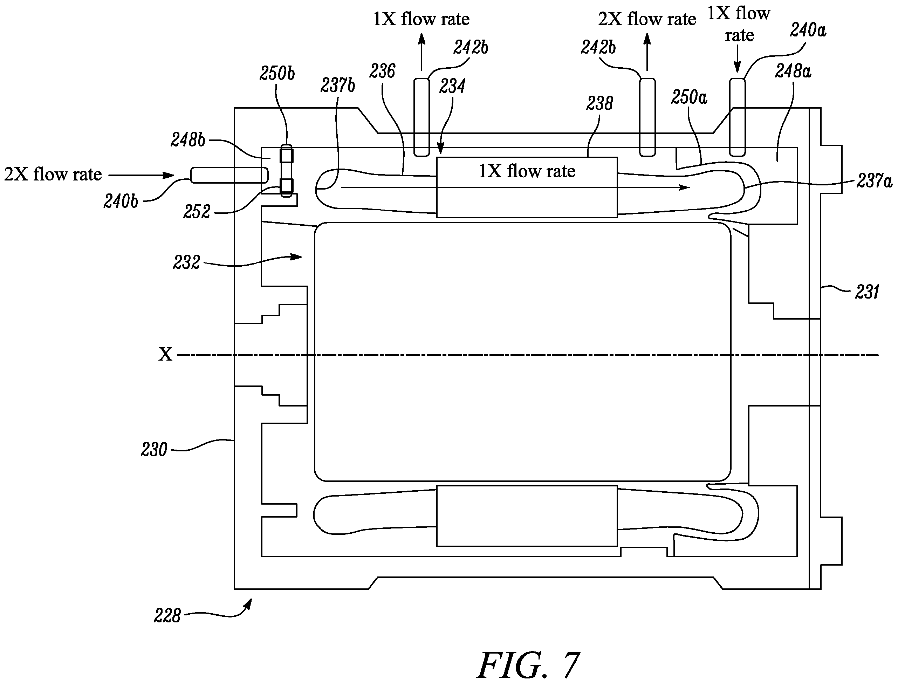

Figure 7 shows a second alternative cooling arrangement for an electric machine in the form of a motor 228, which is in accordance with the present invention.

The motor 228 is again similar to the motors 28, 128, having a rotor 332 and stator 334 comprising a core 238 and stator winding 236 provided within a housing 230. The housing 230 comprises a drive plate 231 through which an axle extends. However, the arrangement of cooling inlets, outlets and baffles differs from that of the motors 28, 128.

In the motor 228, first and second inlets 240a, 240b are provided, which communicate respectively with first and second outlets 242a, 242b via respective baffles 250a, 250b. Each inlet 240a, 240b is provided at a respective axial end of the stator housing 230, and feeds into a respective inlet manifold 248a, 248b. The first inlet 240a is separated from its outlet 242a by a baffle 250a. The baffle 150a is similar to the baffles 50, 150 of the first and second embodiments, having apertures (not shown) extending therethrough, to provide fluid communication between the inlets 240a, and outlet 242a. The baffle 150a is positioned adjacent a first end winding 237a, of the stator winding 236, and extends around radially inner and outer sides of the end winding 237a.

The second end winding 237b is provided with a baffle 250b having a different form. The baffle 250b forms part of the housing, and is provided at the end of the motor opposite the drive plate 231. Again, apertures 252 are provided through the baffle 250b, which extend in a generally axial direction, toward the end winding 237b. Consequently, impingement cooling is provided in this location, though the impingement may be less effective, since coolant is provided in an axial direction only. As such, either reduced cooling effectiveness is achieved, or increased coolant flow is required.

In one embodiment, flow through the stator core 238 may be provided by providing a second inlet 240b and first outlet 242a having a larger diameter relative to the first inlet 240a and second outlet 242b. Coolant flow may be permitted through channels (not shown) in the stator core 238, resulting in the airflow shown in figure 7.

Such an arrangement allows for increased space in the stator housing for winding terminations on the non-drive end of the stator housing 230.

Consequently, in use, coolant (such as air or a liquid coolant) flows from respective inlets 140a, 140b into respective inlet manifolds 148a, 148b, through the apertures provided in the respective baffles 150a, 150b, whereupon the coolant flow impinges on the end windings 137a, 137b. Spent coolant is then directed out of respective outlets 142a, 142b.

It will be understood that the invention is not limited to the embodiments above-described and various modifications and improvements can be made without departing from the concepts described herein. For example, the electric machine may comprise a generator, such as the generator 20 driven by the gas turbine engine 22 of a propulsion system. The electric machine may be utilised in non-aerospace applications, or for non-propulsive purposes in an aircraft. Examples include fuel and hydraulic pumps.

## Claims

1. An electric machine (28) comprising:
a stator winding (34) located within a stator housing (31);
the stator housing comprising an inlet chamber (48) configured to communicate with a supply of coolant, and an outlet (42);
the stator housing comprising a baffle (50) configured to separate the stator winding and outlet from the inlet chamber; wherein
the baffle comprises at least one aperture (52) therethrough configured to supply an impingement flow of coolant to the stator winding; wherein
a first outlet (142a) is provided adjacent a first end winding (137a) separated from a first inlet (140a) by a first baffle (150a), and a second outlet (142b) is provided at second end winding (137b) separated from a second inlet (104b) by a second baffle (150b); **characterized in that**
the first inlet is configured to provide a lower coolant flow rate in use relative to the second inlet;
the first outlet is configured to pass a higher coolant flow rate in use relative to the second outlet; and
the winding (134) defines a channel configured to communicate between the second inlet and first outlet.

2. An electric machine according to claim 1, wherein the baffle is provided adjacent an end winding (37) of the stator.

3. An electric machine according to claim 2, wherein the baffle at least partly surrounds generally opposite sides of the end winding.

4. An electric machine according to any of the preceding claims, wherein the or each aperture in the or each baffle comprises a nozzle (52) configured to accelerate flow through the aperture.

5. An aircraft propulsion system (5) comprising an electric machine (28) in accordance with any of the preceding claims.

6. An aircraft propulsion system according to claim 5, wherein the electric machine comprises one or both of a generator (20) and a motor (28).

7. An aircraft propulsion system according to claim 5 or claim 6, wherein the propulsion system comprises an internal combustion engine (22), and the generator (20) is configured to be driven by the internal combustion engine.

8. An aircraft propulsion system according to any of claims 5 to 7, wherein the propulsion system comprises a propulsor (12), and the motor (28) is configured to drive the propulsor.

## Patentansprüche

1. Elektrische Maschine (28), umfassend:
eine Statorwicklung (34), die sich innerhalb eines Statorgehäuses (31) befindet;
wobei das Statorgehäuse eine Einlasskammer (48), die dazu konfiguriert ist, mit einer Kühlmittelzufuhr in Verbindung zu stehen, und einen Auslass (42) umfasst;
wobei das Statorgehäuse eine Ablenkplatte (50) umfasst, die dazu konfiguriert ist, die Statorwicklung und den Auslass von der Einlasskammer zu trennen; wobei
die Ablenkplatte mindestens eine Öffnung (52) dadurch umfasst, die dazu konfiguriert ist, der Statorwicklung eine Aufprallströmung von Kühlmittel zuzuführen; wobei
ein erster Auslass (142a) angrenzend an einen ersten Wickelkopf (137a) bereitgestellt ist, der von einem ersten Einlass (140a) durch eine erste Ablenkplatte (150a) getrennt ist, und ein zweiter Auslass (142b) an einem zweiten Wickelkopf (137b) bereitgestellt ist, der von einem zweiten Einlass (104b) durch eine zweite Ablenkplatte (150b) getrennt ist; **dadurch gekennzeichnet, dass**
der erste Einlass dazu konfiguriert ist, bei Verwendung eine niedrigere Kühlmittelströmungsrate relativ zu dem zweiten Einlass bereitzustellen;
der erste Auslass dazu konfiguriert ist, bei Verwendung eine höhere Kühlmittelströmungsrate relativ zu dem zweiten Auslass durchzulassen; und
die Wicklung (134) einen Kanal definiert, der dazu konfiguriert ist, eine Verbindung zwischen dem zweiten Einlass und dem ersten Auslass herzustellen.

2. Elektrische Maschine nach Anspruch 1, wobei die Ablenkplatte angrenzend an einen Wickelkopf (37) des Stators bereitgestellt ist.

3. Elektrische Maschine nach Anspruch 2, wobei die Ablenkplatte mindestens teilweise im Allgemeinen gegenüberliegende Seiten des Wickelkopfs umgibt.

4. Elektrische Maschine nach einem der vorhergehenden Ansprüche, wobei die oder jede Öffnung in der oder jeder Ablenkplatte eine Düse (52) umfasst, die dazu konfiguriert ist, eine Strömung durch die Öffnung zu beschleunigen.

5. Luftfahrzeugvortriebssystem (5), umfassend eine elektrische Maschine (28) nach einem der vorhergehenden Ansprüche.

6. Luftfahrzeugvortriebssystem nach Anspruch 5, wobei die elektrische Maschine eines oder beide von einem Generator (20) und einem Motor (28) umfasst.

7. Luftfahrzeugvortriebssystem nach Anspruch 5 oder Anspruch 6, wobei das Vortriebssystem einen Verbrennungsmotor (22) umfasst und der Generator (20) dazu konfiguriert ist, durch den Verbrennungsmotor angetrieben zu werden.

8. Luftfahrzeugvortriebssystem nach einem der Ansprüche 5 bis 7, wobei das Vortriebssystem eine Vortriebseinrichtung (12) umfasst und der Motor (28) dazu konfiguriert ist, die Vortriebseinrichtung anzutreiben.

## Revendications

1. Machine électrique (28) comprenant :
un enroulement de stator (34) situé à l'intérieur d'un boîtier de stator (31) ;
le boîtier de stator comprenant une chambre d'entrée (48) configurée pour communiquer avec une alimentation en liquide de refroidissement, et une sortie (42) ;
le boîtier de stator comprenant une chicane (50) configurée pour séparer l'enroulement de stator et la sortie de la chambre d'entrée ;
ladite chicane comprenant au moins une ouverture (52) à travers celle-ci, configurée pour fournir un flux incident de liquide de refroidissement à l'enroulement de stator ;
une première sortie (142a) étant située adjacente à un premier enroulement d'extrémité (137a) séparé d'une première entrée (140a) par une première chicane (150a), et une seconde sortie (142b) étant située au niveau d'un second enroulement d'extrémité (137b) séparé d'une seconde entrée (104b) par une seconde chicane (150b) ; **caractérisée en ce que**
la première entrée est configurée pour fournir un débit de liquide de refroidissement inférieur en utilisation par rapport à la seconde entrée ;
la première sortie est configurée pour laisser passer un débit de liquide de refroidissement plus élevé en utilisation par rapport à la seconde sortie ; et
l'enroulement (134) définit un canal configuré pour communiquer entre la seconde entrée et la première sortie.

2. Machine électrique selon la revendication 1, ladite chicane étant située adjacente à un enroulement d'extrémité (37) du stator.

3. Machine électrique selon la revendication 2, ladite chicane entourant au moins partiellement des côtés généralement opposés de l'enroulement d'extrémité.

4. Machine électrique selon l'une quelconque des revendications précédentes, l'ouverture ou chaque ouverture dans la chicane ou chaque chicane comprenant une buse (52) configurée pour accélérer un écoulement par l'ouverture.

5. Système de propulsion d'aéronef (5) comprenant une machine électrique (28) selon l'une quelconque des revendications précédentes.

6. Système de propulsion d'aéronef selon la revendication 5, ladite machine électrique comprenant un générateur (20) et un moteur (28), ou les deux.

7. Système de propulsion d'aéronef selon la revendication 5 ou la revendication 6, ledit système de propulsion comprenant un moteur à combustion interne (22), et ledit générateur (20) étant configuré pour être entraîné par le moteur à combustion interne.

8. Système de propulsion d'aéronef selon l'une quelconque des revendications 5 à 7, ledit système de propulsion comprenant un propulseur (12), et ledit moteur (28) étant configuré pour entraîner le propulseur.
